# EUROPEAN PATENT APPLICATION

(11) **EP 3 681 013 A1**
(43) Date of publication of application: **15.07.2020**
(21) Application number: 19195347.0
(22) Date of filing: 04.09.2019
(51) Int. Cl.: H02K 1/02, H02K 1/27, H02K 16/02

(54) **MOTOR AND COMPRESSOR HAVING THE SAME**

(30) Priority: 11.01.2019 KR 20190004132
(71) Applicant: LG ELECTRONICS INC., Yeongdeungpo-Gu Seoul 07336 (KR)
(72) Inventor: YIM, Woogyong, 08592 Seoul (KR); KIM, Jehoon, 08592 Seoul (KR); GWON, Ochang, 08592 Seoul (KR); KIM, Taekyoung, 08592 Seoul (KR)
(74) Representative: Vossius & Partner Patentanwälte Rechtsanwälte mbB

(57) **Abstract**

A driving motor includes a stator having an accommodating space formed therein and a rotor having a magnetic member, rotatably provided in the accommodating space, and rotated by a magnetic interaction with the stator, wherein the rotor may be formed of a plurality of stacked bodies having magnetic members having different magnetic forces, respectively.

## Description

### BACKGROUND OF THE DISCLOSURE

### 1. Field of the Disclosure

The present disclosure relates to a motor for driving an electric compressor (or motor-operated compressor).

### 2. Background of the Disclosure

Generally, compressors for compressing a refrigerant in automotive air conditioning systems have been developed in various forms. Recently, electric compressors driven by electricity using motors have been actively developed as vehicle parts tend to become electric parts.

Electric compressors mainly adopts a scroll compressing method suitable for a high compression ratio operation, among various compression methods. In such a scroll-type electric compressor, a driving motor is installed inside a sealed casing, and a compression unit including a fixed scroll and an orbiting scroll is installed on one side of the driving motor. The driving motor and the compression unit are connected to each other by a rotating shaft and a rotational force of the driving motor is transmitted to the compression unit.

The rotational force transmitted to the compression unit causes the orbiting scroll to make an orbiting motion relative to the fixed scroll to form a pair of two compression chambers including a suction chamber, an intermediate pressure chamber, and a discharge chamber. A refrigerant is sucked into both compression chambers, compressed, and simultaneously discharged to thereby form a desired pressure.

The driving motor generally includes a stator which is fixed inside a casing and generates a magnetic field by an applied current and a rotor which is rotatably received in the stator and rotated by a magnetic interaction with the stator. A rotating shaft is coupled to the center of the rotor, and the rotating shaft is eccentrically mounted on the orbiting scroll to cause the orbiting scroll to make an orbiting motion to compress the refrigerant.

Efficiency of the compressor is directly related to efficiency of the driving motor, and a technique of installing a magnetic member such as a permanent magnet on the rotor to increase efficiency of the driving motor has been proposed. This technique may increase efficiency of the motor by using a magnet torque generated by the magnetic member.

A motor including the magnetic member such as a permanent magnet embedded in the rotor is referred to as a permanent magnet synchronous motor (PMSM). Particularly, a type in which the magnetic member is embedded in the rotor without being attached to the surface of the rotor is referred to as an interior permanent magnet synchronous motor (IPMSM).

The rotor of the embedded type IPMSM may be manufactured using a neodymium (Nd) magnet having a strong magnetic force for miniaturization and high output. However, in the case of Nd magnet, manufacturing cost of the motor is increased due to a high material cost. Accordingly, a technique for improving performance of a motor while reducing usage of the Nd magnet has been proposed.

Patent Document 1 [Korean Patent Laid-open Publication No. 10-2009-0072209 (published on July 2, 2009)] discloses a structure of a rotor capable of producing a desired level of torque while using a small amount of permanent magnets. According to this structure, a flux barrier is provided outside a permanent magnet and torque of the motor is increased by using a reluctance torque induced by a flux barrier. That is, a magnetic flux amount of a q axis is sufficiently formed, while a magnet torque of a d axis is generated, to increase the reluctance torque, thereby improving the torque of the motor.

In this case, however, a torque ripple may be increased as the magnetic flux amount of the q axis increases. In addition, there is a problem that the magnet torque reduced by the volume of the reduced volume of the permanent magnet may not be sufficiently compensated by the increased reluctance torque, thereby reducing a total torque.

Also, Patent Document 2 [Korean Patent Laid-Open Publication No. 10-2006-0108555 (published on October 18, 2006)] discloses a structure capable of reducing a torque ripple, while suppressing a decrease in an average value of an output torque. Specifically, a technique of changing a shape of an outer circumferential surface of a rotor for a direction of a q axis, that is, between a magnet and a magnet, to a component for reducing a torque ripple.

However, when the shape of the outer circumferential surface of the rotor is changed with respect to the q-axis direction, the magnet is away from the outer circumferential surface of the rotor and the magnet torque is reduced. In addition, since a precise process is required to shape the outer circumferential surface of the rotor, manufacturing cost of the motor is increased.

### SUMMARY OF THE DISCLOSURE

Therefore, an aspect of the detailed description is to provide a motor capable of lowering manufacturing cost and a compressor including the same.

Another aspect of the detailed description is to provide a motor capable of reducing the usage of magnetic members provided in a rotor, while maintaining performance of the motor, and a compressor including the same.

Still another aspect of the detailed description is to provide a motor including a rotor formed of a plurality of stacked bodies having different characteristics, and a compressor including the same.

Yet another aspect of the detailed description is to provide a structure of a driving motor in which characteristics of magnetic flux is improved, thus increasing reliability.

A driving motor according to the present invention may include a rotor formed of a plurality of stacked bodies forming different magnet torques.

A driving motor according to the present invention may include a stator having an accommodating space formed therein; and a rotor having a magnetic member, rotatably provided in the accommodating space, and rotated by a magnetic interaction with the stator, wherein the rotor may be formed of a plurality of stacked bodies having magnetic members having different magnetic forces, respectively.

Further, the plurality of stacked bodies may have different maximum values of magnet torque.

In addition, a stacked body having a relatively small maximum value of magnet torque among the plurality of stacked bodies may have a maximum value of reluctance torque larger than a stacked body having a relatively large maximum value of magnet torque.

Furthermore, the plurality of stacked bodies may have the same number of poles.

The plurality of stacked bodies may be arranged so as to be alternately stacked.

According to the present invention, the rotor may include a first stacked body having a first magnetic member and a second stacked body having a second magnetic member having a magnetic force smaller than that of the first magnetic member. Here, the first stacked body and the second stacked body may be stacked in an axial direction.

Here, the first and second magnetic members may each be provided as a plurality of magnetic members and arranged to be spaced apart from each other in a circumferential direction of the rotor.

Furthermore, a circumferential first interval between adjacent first magnetic members may be smaller than a circumferential second interval between adjacent second magnetic members.

The first and second magnetic members may be arranged to extend in a direction perpendicular to a radial direction of the rotor, and an extended length of the first magnetic member may be larger than an extended length of the second magnetic member. That is, the second magnetic member may be formed smaller than the first magnetic member.

Here, the first and second magnetic members may include a Nd magnet.

According to the present invention, the first and second stacked bodies may include first and second magnetic member accommodating portions formed to penetrate in the axial direction so as to accommodate the first and second magnetic members, respectively.

Here, the first and second magnetic member accommodating portions may extend in a direction perpendicular to a radial direction of the rotor, and an extended length of the first magnetic member accommodating portion may be larger than an extended length of the second magnetic member accommodating portion.

In addition, an interval between adjacent first magnetic member accommodating portions may be smaller than an interval between adjacent second magnetic member accommodating portions.

In the driving motor according to the present invention, the first magnetic member and the second magnetic member may be disposed to overlap with each other in the axial direction.

In the driving motor according to the present invention, axial lengths of the first stacked body and the second stacked body may be equal.

In addition, in the driving motor according to the present invention, the first magnetic member may be formed to extend in a direction perpendicular to a radial direction of the rotor, and the second magnetic member may be formed to be concave toward an outer circumferential surface of the second stacked body.

Here, the first magnetic member may include an Nd magnet, and the second magnetic member may include a ferrite magnet.

Here, the first and second magnetic members may be provided as a plurality of magnetic members and arranged to be spaced apart from each other in a circumferential direction of the rotor. The second magnetic members may be provided as a plurality of magnetic members along the radial direction.

A driving motor according to the present invention may include: a stator having an accommodating space formed therein; and a rotor having a magnetic member, rotatably provided in the accommodating space, and rotated by a magnetic interaction with the stator. Here, the rotor may include a first stacked body having a maximum value of first magnet torque and a second stacked body having a maximum value of second magnet torque smaller than the maximum value of first magnet torque.

Here, the second stacked body may have a maximum value of reluctance torque larger than a maximum value of reluctance torque of the first stacked body.

The first stacked body and the second stacked body may be arranged alternately along an axial direction.

An electric compressor according to the present invention may include: the driving motor, a rotating shaft coupled to the rotor and rotating together with the rotor, a first scroll coupled to the rotating shaft and performing an orbiting motion, and a second scroll coupled to the first scroll to form a pair of compression chambers.

According to the present invention, since the rotor is formed of a plurality of stacked bodies having magnetic members having different magnetic forces, performance of the motor may be maintained while reducing magnet usage. As a result, manufacturing cost of the driving motor may be ultimately reduced.

Due to the structure of the rotor including the first stacked body in which a magnet usage is relatively large to strengthen a magnet and the second stacked body in which a magnet usage is relatively small and a reluctance torque is strengthened, an output of the driving motor may be increased, while reducing magnetic member usage. In other words, it is possible to maintain the same output as an output of a driving motor which does not reduce the magnetic member usage.

Furthermore, a phenomenon of a torque ripple increased as the reluctance torque is increased may be restricted by securing the q-axis magnetic field path.

Further, since a plurality of magnetic members are provided along the axial direction by the above structure, an eddy current inside the magnetic member may be reduced and efficiency of the motor may be increased.

Further, since the rotor may be designed through various combinations of the first stacked body and the second stacked body, the degree of freedom in designing the rotor may be increased.

Further scope of applicability of the present application will become more apparent from the detailed description given hereinafter. However, it should be understood that the detailed description and specific examples, while indicating preferred embodiments of the disclosure, are given by way of illustration only, since various changes and modifications within the scope of the disclosure will become apparent to those skilled in the art from the detailed description.

### BRIEF DESCRIPTION OF THE DRAWINGS

FIG. 1 is a perspective view illustrating an appearance of an electric compressor according to the present invention.
FIG. 2 is an exploded perspective view illustrating a compressor module and an inverter module separated from each other in the electric compressor illustrated in FIG. 1.
FIG. 3 is an exploded perspective view of the electric compressor illustrated in FIG. 1.
FIG. 4 is a cross-sectional view of the electric compressor illustrated in FIG. 1.
FIG. 5 is a perspective view of a rotor according to an embodiment of the present invention.
FIG. 6 is an exploded perspective view of the rotor illustrated in FIG. 4.
FIG. 7A is a cross-sectional view of a first stacked body of the rotor illustrated in FIG. 5.
FIG. 7B is a cross-sectional view of a second stacked body of the rotor illustrated in FIG. 5.
FIG. 8 is an exploded perspective view of a rotor according to a modification of the embodiment of the present invention.
FIG. 9 is an exploded perspective view of a rotor according to another modification of the embodiment of the present invention.
FIG. 10A is an exploded perspective view of a rotor according to another embodiment of the present invention.
FIG. 10B is a cross-sectional view of a second stacked body of the rotor illustrated in FIG. 10A.
FIG. 11A is a perspective view of a rotor according to another embodiment of the present invention.
FIG. 11B is an exploded perspective view of the rotor illustrated in FIG. 11.
FIG. 11C is a cross-sectional view of the rotor illustrated in FIG. 11B.
FIG. 12A is an exploded perspective view of a rotor according to another embodiment of the present invention.
FIG. 12B is a cross-sectional view of the rotor illustrated in FIG. 12A.

### DETAILED DESCRIPTION OF THE DISCLOSURE

Hereinafter, an electric compressor according to the present invention will be described in more detail with reference to the accompanying drawings.

For the sake of brief description with reference to the drawings, the same or equivalent components may be provided with the same or similar reference numbers, and description thereof will not be repeated.

It will be understood that when an element is referred to as being "connected with" another element, the element can be connected with the other element or intervening elements may also be present. In contrast, when an element is referred to as being "directly connected with" another element, there are no intervening elements present.

A singular representation may include a plural representation unless it represents a definitely different meaning from the context.

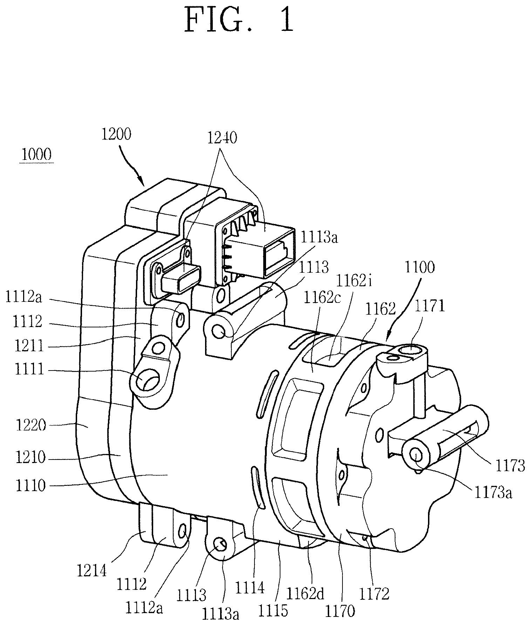

FIG. 1 is a perspective view illustrating an appearance of an electric compressor 1000 provided in the present invention.

The electric compressor 1000 includes a compressor module 1100 and an inverter module 1200.

The compressor module 1100 refers to a set of components for compressing a fluid such as a refrigerant. The inverter module 1200 refers to a set of components for controlling driving of the compressor module 1100. The inverter module 1200 may be coupled to one side of the compressor module 1100. When a direction is set based on a flow of the fluid compressed by the electric compressor 1000, one side of the compressor module 1100 refers to a front side of the compressor module 1100. The fluid flows into an intake port 1111 and discharged to a discharge port 1171 so that the inverter module 1200 disposed close to the intake port 1111 may be described as being coupled to the front side of the compressor module 1100.

The appearance of the compressor module 1100 may be formed by a main housing 1110, a second scroll 1162, and a rear housing 1170.

The main housing 1110 has an appearance having a hollow cylindrical shape, polygonal column shape, or the like. The main housing 1110 may be arranged to extend transversely with respect to the ground. Both ends of the main housing 1110 may be entirely or partially opened. Specifically, a front end of the main housing 1110 is opened and a rear end of the main housing 1110 is partially opened.

The intake port 1111, a main housing side fastening portion 1112, a main housing side fixing portion 1113, and the like, are formed on the outer circumferential surface of the main housing 1110.

The intake port 1111 forms a flow path for supplying the fluid to be compressed to an internal space of the electric compressor 1000. The intake port 1111 may protrude from the outer circumferential surface of the main housing 1110. The intake port 1111 may be connected to an intake pipe (not shown) for supplying the fluid to be compressed to the electric compressor 1000. The intake port 1111 has a shape corresponding to the intake pipe so as to be coupled to the intake pipe.

The main housing side fastening portion 1112 is a component for coupling the compressor module 1100 with the inverter module 1200. The main housing side fastening portion 1112 may protrude from the outer circumferential surface of the main housing 1110. The main housing side fastening portion 1112 may be formed in plural along the outer circumferential surface of the main housing 1110. The plurality of main housing side fastening portions 1112 may be spaced apart from each other. A fastening hole 1112a for fastening a bolt is formed on the main housing side fastening portion 1112 on the main housing side. The main housing side fastening portion 1112 may be bolted to the inverter housing 1210 of the inverter module 1200 through the fastening hole 1112a or may be bolted to the inverter housing side fastening portion 1214 formed on the inverter housing 1210.

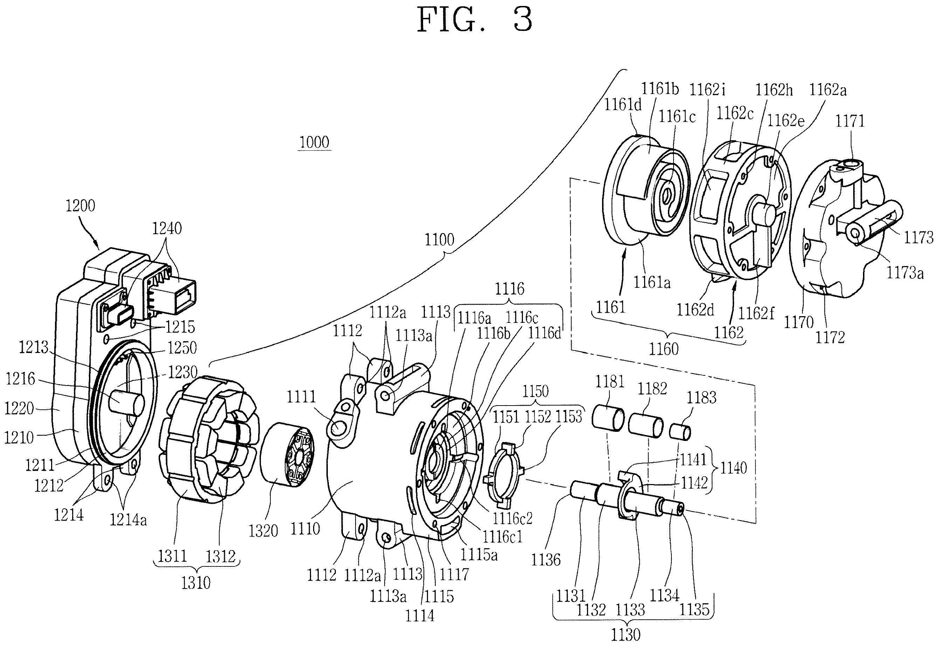

The main housing side fixing portion 1113 is a component for fixing the electric compressor 1000. The main housing side fixing portion 1113 may protrude from the outer circumferential surface of the main housing 1110. The main housing side fixing portion 1113 may extend along the outer circumferential surface of the main housing 1110. The main housing side fixing portion 1113 may include a fixing hole 1113a which may be coupled with any fastening member. The fixing hole 1113a may be opened toward a direction perpendicular to an axial direction of a rotating shaft 1130 (see FIG. 3) to be described later. Here, the axial direction refers to an extending direction of the rotating shaft 1130. The main housing side fixing portion 1113 may be formed on one side and the other side of the main housing 1110. For example, in FIG. 1, the main housing side fixing portions 1113 are formed on the upper and lower sides of the main housing 1110, respectively.

A weight reducing recess 1114 may be formed on the outer circumferential surface of the main housing 1110. A plurality of weight reducing recesses 1114 may be formed along the outer circumferential surface of the main housing 1110. The plurality of weight reducing recesses 1114 may be spaced apart from each other. The weight reducing recesses 1114 serve to reduce a weight of the main housing 1110.

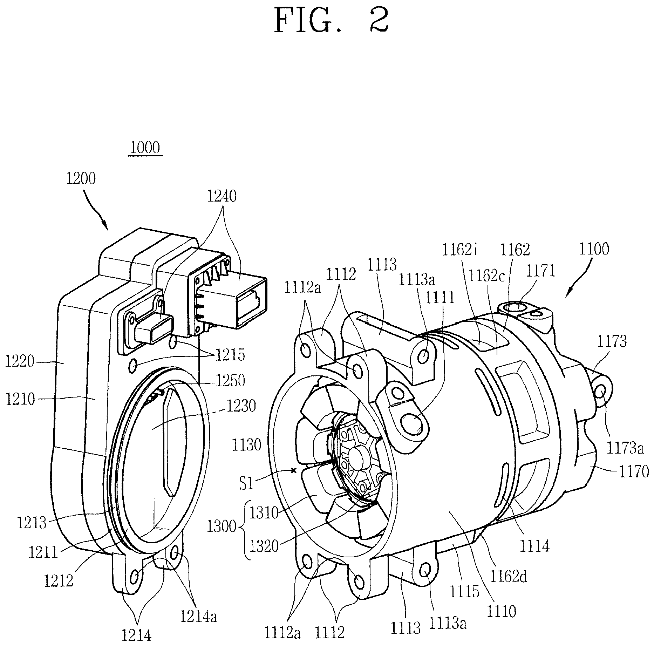

A first protrusion 1115 may be formed on the outer circumferential surface of the main housing 1110. The first protrusion 1115 may extend in the axial direction or a direction parallel to the axial direction on the outer circumferential surface of the main housing 1110. A first flow path 1115a (see FIG. 3) communicating with a motor chamber S1 (see FIG. 2) may be formed inside the first protrusion 1115.

The second scroll 1162 is installed on the other side of the main housing 1110 or on the rear side of the main housing 1110. A side wall portion 1162c of the second scroll 1162 may be formed to correspond to the outer circumferential surface of the main housing 1110. The second scroll 1162 may be installed inside the main housing 1110 unlike that illustrated in FIG. 1.

A weight reducing recess 1162i may also be formed on an outer circumferential surface of the second scroll 1162 as in the main housing 1110. The weight reducing recesses 1162i formed on the outer circumferential surface of the second scroll 1162 may be formed in plural. The plurality of weight reducing recesses 1162i may be spaced apart from each other. The weight reducing recesses 1162i serve to reduce a weight of the second scroll 1162.

The rear housing 1170 is installed on the other side of the second scroll 1162 or on the rear side of the second scroll 1162. The rear housing 1170 may be formed to cover the rear side of the second scroll 1162.

The rear housing 1170 includes the discharge port 1171, a fastening hole 1172, and a fixing portion 1173.

The discharge port 1171 forms a flow path for discharging the fluid compressed in the electric compressor 1000 to the outside. The discharge port 1171 may protrude from the outer circumferential surface of the rear housing 1170. The discharge port 1171 may be connected to a discharge pipe (not shown) for supplying the compressed fluid to a next device of a refrigeration cycle. The discharge port 1171 has a shape corresponding to the discharge pipe so as to be coupled with the discharge pipe.

The fastening hole 1172 may be formed in plural. The plurality of fastening holes 1172 are disposed to be spaced apart from each other along the circumference of the rear housing 1170. The rear housing 1170 may be bolted to the second scroll 1162 through the fastening holes 1172.

A side surface of the rear housing 1170 includes two portions forming a step. A portion where the fastening hole 1172 is formed may form a step with another portion of the rear housing 1170. The step is repeatedly formed along the outer circumferential surface of the rear housing 1170. The portion where the fastening hole 1172 is formed is disposed closer to the second scroll 1162 than the other portion. Accordingly, a bolt inserted into the fastening hole 1172 may have a relatively short length.

The fixing portion 1173 is a component for fixing the electric compressor 1000. The fixing portion 1173 is the same as or similar to the fixing portion 1113 formed in the main housing 1110. The fixing portion 1173 of the rear housing 1170 may protrude from the outer circumferential surface of the rear housing 1170. The fixing portion 1173 may extend along a side surface of the rear housing 1170. The fixing portion 1173 may have a fixing hole 1173a that may be coupled with any fastening member. The fixing hole 1173a may be opened toward a direction perpendicular to the axial direction of the rotating shaft 1130 which will be described later.

The appearance of the inverter module 1200 is formed by an inverter housing 1210 and an inverter cover 1220.

The inverter housing 1210 is coupled to the opposite side of the rear housing 1170, among both ends of the main housing 1110, that is, to the front end forming an opening end of the main housing 1110 to cover the front end opening of the main housing 1110. The inverter housing 1210 may have an outer circumferential surface larger than the main housing 1110. Accordingly, the inverter housing 1210 may have a shape protruding from the main housing 1110. In FIG. 1, the inverter housing 1210 has a shape protruding upward from the main housing 1110.

An inverter housing side fastening portion 1214 and a connector portion 1240 are formed in the inverter housing 1210. The inverter housing side fastening portion 1214 is a component for coupling the inverter module 1200 with the compressor module 1100. The inverter housing side fastening portion 1214 may protrude from the outer circumferential surface of the inverter housing 1210. The inverter housing side fastening portion 1214 may be formed in plural along the outer circumferential surface of the inverter housing 1210. The plurality of inverter housing side fastening portions 1214 may be arranged to be spaced apart from each other. A fastening hole 1214a (see FIG. 2) for bolt fastening is formed at the inverter housing side fastening portion 1214. The inverter housing side fastening portion 1214 may be bolted to the main housing 1110 of the compressor module 1100 through the fastening hole 1214a.

The main housing side fastening portion 1112 may be bolted to an outer surface 1211 of the inverter housing 1210.

The connector portion 1240 is installed to provide electric power to an inverter component 1230 (see FIG. 2) installed inside the inverter module 1200 and/or a driving motor 1120 installed inside the compressor module 1100. Here, the inverter component 1230 is a concept including an electrical component such as a printed circuit board and an inverter element. The connector portion 1240 may be physically and electrically connected to a counterpart connector (not shown). Electric power supplied through the counterpart connector is provided to the inverter component 1230 and/or the driving motor 1120 through the connector portion 1240.

The inverter cover 1220 may have substantially the same outer circumferential surface as the inverter housing 1210. The inverter cover 1220 and the inverter housing 1210 are coupled to each other along the circumference to accommodate the inverter component 1230 therein.

FIG. 2 is an exploded perspective view illustrating the compressor module 1100 and the inverter module 1200 separated from each other in the electric compressor 1000 illustrated in FIG. 1.

When the compressor module 1100 and the inverter module 1200 are separated from each other, a motor chamber S1 is visually exposed.

The motor chamber S1 is formed as the main housing 1110 and the inverter housing 1210 are coupled. The motor chamber S1 refers to a space in which the driving motor 1120 is installed. A sealing member 1213 such as an O-ring may be installed along a coupling position of the main housing 1110 and the inverter housing 1210 in order to seal the motor chamber S1.

The driving motor 1120 is installed in the motor chamber S1. The driving motor 1120 includes a stator 1121 and a rotor 1122.

The stator 1121 is installed along an inner circumferential surface of the main housing 1110 and fixed to the inner circumferential surface of the main housing 1110. The stator 1121 is inserted and fixed to the main housing 1110 by heat shrinking (or hot pressing). Therefore, in order to ensure ease of an assembling operation of the stator 1121, an insertion depth of the stator 1121 inserted into the main housing 1110 is advantageously set to be small (or shallow). Further, in order to maintain concentricity of the stator 1121 in the process of heat shrinking, the insertion depth of the stator 1121 is advantageously set to be small.

The rotor 1122 is installed in an area surrounded by the stator 1121. The rotor 1122 is rotated by an electromagnetic interaction with the stator 1121.

The rotating shaft 1130 is coupled to the center of the rotor 1122. The rotating shaft 1130 rotates together with the rotor 1122 and transmits a rotational force generated by the driving motor 1120 to a compression unit 1160 (see FIG. 3) to be described later. The rotating shaft 1130 is inserted and fixed to the rotor 1122 by heat shrinking (or hot pressing). Hereinafter, the details will be described later.

The inverter housing 1210 is provided with an electrical connection portion 1250 exposed toward the motor chamber S1. The electrical connection portion 1250 is electrically connected to the printed circuit board of the inverter module 1200. Electrical connection portion 1250 may be formed to provide electric power to the driving motor 1120.

A fastening hole 1215 may be formed on an outer surface 1211 of the inverter housing 1210 so as to face the main housing side fastening portion 1112. The main housing side fastening portion 1112 and the fastening hole 1215 may be bolted to each other. Also, as described above, the inverter housing side fastening portion 1214 may have a fastening hole 1214a to correspond to the main housing side fastening portion 1112. The main housing side fastening portion 1112 and the inverter housing side fastening portion 1214 may be bolted to each other.

A sealing protrusion 1212 may protrude from the outer surface of the inverter housing 1210. The circumference of the sealing protrusion 1212 may have a shape corresponding to the circumference of the main housing 1110. For example, the sealing protrusion 1212 may protrude in a circular shape, and the inner circumferential surface of the sealing protrusion 1212 may contact the inner circumferential surface of the opening of the main housing 1110. A sealing member 1213 such as an O-ring may be installed between the inner circumferential surface of the opening end of the main housing 1110 and the sealing protrusion 1212. The sealing member 1213 may be formed to surround the sealing protrusion 1212.

A thrust support portion 1216 protrudes from one surface of the inverter housing 1210 toward the rotating shaft 1130. The thrust support portion 1216 may have a cylindrical shape or polygonal column shape. The inverter housing 1210 has a surface facing the rotating shaft 1130 and the thrust support portion 1216 protrudes from the surface to face a bottom surface 1136 of the rotating shaft 1130.

The thrust support portion 1216 protrudes to a position in surface contact with the bottom surface 1136 of the rotating shaft 1130. The bottom surface 1136 of the rotating shaft 1130 refers to a circular surface formed at the front end of the rotating shaft 1130 exposed in the motor chamber S1 in FIG. 2.

In the present invention, the term of "housing" may be used as a concept including all the components forming the appearance of the electric compressor 1000 such as the main housing 1110, the rear housing 1170, the inverter housing 1210, the inverter cover 1220, and the like. Thus, the housing forms the appearance of the electric compressor 1000, and when referred to as the housing, the housing may be understood to indicate at least one of the main housing 1110, the rear housing 1170, the inverter housing 1210, and the inverter cover 1220. For example, when the thrust support portion 1216 protrudes from one side of the housing, it means that the rotating shaft 1130 may protrude toward the rotating shaft 1130 from any of the main housing 1110, the rear housing 1170, the inverter housing 1210, and the inverter cover 1220.

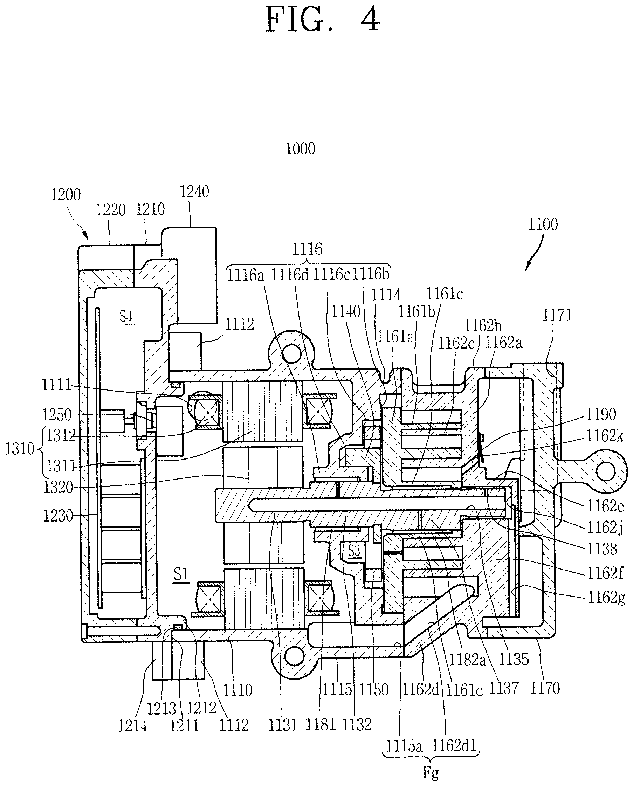

FIG. 3 is an exploded perspective view of the electric compressor 1000 illustrated in FIGS. 1 and 2. FIG. 4 is a cross-sectional view of the electric compressor 1000 illustrated in FIGS. 1 and 2.

The electric compressor 1000 includes a compressor module 1100 and the inverter module 1200.

The compressor module 1100 includes the main housing 1110, the driving motor (a driving unit or a motor unit 1120), the compression unit 1160, and the rear housing 1170.

First, the main housing 1110 will be described.

The front end of the main housing 1110 is an opening end. If the opening end is a first end, a frame portion 1116 is formed at a second end corresponding to the rear end. The frame portion 1116 may be integrally formed with the main housing 1110 or may be a separate member. When the frame portion 1116 is integrally formed with the main housing 1110, a process of assembling the frame portion 1116 to the main housing 1110 separately may be excluded, thereby reducing the number of assembling processes and improving assembling performance of the driving member 1120.

The frame portion 1116 forms a boundary for partitioning the internal space of the main housing 1110. As the frame portion 1116 is formed at the second end of the main housing 1110, the second end of the main housing 1110 forms a partially clogged structure.

The front side of the frame portion 1116 protrudes in a direction toward the driving motor 1120 (toward the first end). Meanwhile, the rear side of the frame portion 1116 is recessed so as to be stepped at least twice in a direction toward the driving motor 1120.

A first shaft receiving portion 1116a is formed at the center of the frame portion 1116. The first shaft receiving portion 1116a is formed in a hollow cylindrical shape to rotatably support the rotating shaft 1130 passing through the frame portion 1116. A first bearing 1181 formed of a bush bearing may be inserted into the first shaft receiving portion 1116a.

The first shaft receiving portion 1116a may protrude in a direction toward the driving motor 1120. One end of the first shaft receiving portion 1116a facing the driving motor 1120 may be referred to as a front end. The first shaft receiving portion 1116a may protrude in a direction toward the first scroll 1161. The other end of the first shaft receiving portion 1116a facing the first scroll 1161 may be referred to as a rear end. The rear end of the first shaft receiving portion 1116a is formed at a position surrounded by a balance weight accommodating recess 1116d to be described later.

A scroll seating recess 1116b, a rotation preventing mechanism seating recess 1116c, and a balance weight accommodating recess 1116d are formed on the rear side of the frame portion 1116. The scroll seating recess 1116b, the rotation preventing mechanism seating recess 1116c, the balance weight accommodating recess 1116d, and the rear end of the first shaft receiving portion 1116a are continuously formed in a stepped manner to form a back pressure chamber S3.

The scroll seating recess 1116b is formed to axially support the first scroll 1161. The first scroll 1161 has an orbiting disk plate portion 1161a, and the scroll seating recess 1116b forms a ring-shaped support surface corresponding to the orbiting disk plate portion 1161a. The ring-shaped support surface may be partitioned into a plurality of areas by key grooves 1116c1 and 1116c2.

The rotation preventing mechanism seating recess 1116c is formed in the area enclosed by the scroll seating recess 1116b. The oldham ring 1150 has a ring-shaped ring portion 1151, and the rotation preventing mechanism seating recess 1116c forms a ring-shaped support surface corresponding to the ring portion 1151 of the oldham ring 1150. The rotation preventing mechanism seating recess 1116c is formed at a position further recessed toward the driving motor 1120 than the scroll seating recess 1116b.

A plurality of key grooves 1116c1 and 1116c2 for seating key portions 1152 and 1153 of the oldham ring 1150 are formed in the rotation preventing mechanism seating recess 1116c. The key grooves 1116c1 and 1116c2 are formed in a radial direction of the rotation preventing mechanism seating recess 1116c. The key grooves 1116c1 and 1116c2 are formed one by one at intervals of 90° along the rotation preventing mechanism seating recesses 1116c.

The balance weight accommodating recesses 1116d are formed in an area enclosed by the rotation preventing mechanism seating recesses 1116c. The balance weight accommodating recess 1116d forms a ring to accommodate the balance weight 1140 rotatably. The balance weight accommodating recess 1116d may be formed in a ring shape.

The first shaft receiving portion 1116a is formed in an area enclosed by the balance weight accommodating recess 1116d. The first shaft receiving portion 1116a may protrude from the center of the balance weight accommodating recess 1116d to the rear side of the main housing 1110.

A first protrusion 1115 is formed on the outer circumferential surface of the main housing 1110. A first flow path 1115a communicating with the motor chamber S1 is formed inside the first protrusion 1115. The first flow path 1115a is formed to penetrate through the first protrusion 1115. The first flow path 1115a forms an intaking flow path Fg allowing the compression chamber and the motor chamber S1 to communicate with each other together with a second flow path to be described later.

A fastening hole 1117 is formed around the second end of the main housing 1110. The fastening hole 1117 may be formed in plural. The plurality of fastening holes 1117 may be arranged to be spaced apart from each other around the second end of the main housing 1110. A fastening hole 1162h is also formed in the second scroll 1162 to be described later. The fastening holes 1117 of the main housing 1110 and the fastening hole 1162h of the second scroll 1162 are formed at positions corresponding to each other. Accordingly, the main housing 1110 and the second scroll 1162 may be bolted to each other.

The driving motor 1120 will be described later with a rotor structure of the present invention to be described later.

Next, the rotating shaft 1130 will be described.

The rotating shaft 1130 includes a driving motor coupling portion 1131, a main bearing portion 1132, an eccentric portion 1133, a sub-bearing portion 1134, and a lubricant flow path 1135. The driving motor coupling portion 1131, the main bearing portion 1132, the eccentric portion 1133 and the sub-bearing portion 1134 are continuously formed along the axial direction of the rotating shaft 1130. The driving motor coupling portion 1131, the main bearing portion 1132, the eccentric portion 1133, and the sub-bearing portion 1134 may have a cylindrical shape, and outer diameters thereof may be the same or different from each other.

The driving motor coupling portion 1131 is coupled to the rotor 1122. The driving motor coupling portion 1131 may extend in the axial direction and penetrate through the center of the rotor 1122.

The main bearing portion 1132 extends in the axial direction from the driving motor coupling portion 1131. The main bearing portion 1132 may have an outer diameter larger than that of the driving motor coupling portion 1131. The center of the main bearing portion 1132 matches the center of the driving motor coupling portion 1131 in the axial direction. The main bearing portion 1132 is inserted into the first shaft receiving portion 1116a of the frame portion 1116 and penetrates through the first shaft receiving portion 1116a. The first shaft receiving portion 1116a is formed to surround the main bearing portion 1132. The circumference of the main bearing portion 1132 is rotatably supported by the first shaft receiving portion 1116a.

The eccentric portion 1133 extends in the axial direction from the main bearing portion 1132. The eccentric portion 1133 may have an outer diameter smaller than that of the main bearing portion 1132. The center of the eccentric portion 1133 does not match the center of the driving motor coupling portion 1131 and/or the center of the main bearing portion 1132 in the axial direction. Therefore, the center of the eccentric portion 1133 is formed at a position eccentric from the center of the driving motor coupling portion 1131 or the center of the main bearing portion 1132. The eccentric portion 1133 is inserted into the rotating shaft coupling portion 1161c of the first scroll 1161 and penetrates through the rotating shaft coupling portion 1161c.

The sub-bearing portion 1134 extends in the axial direction from the eccentric portion 1133. The sub-bearing portion 1134 may have an outer diameter smaller than that of the eccentric portion 1133. The center of the sub-bearing portion 1134 matches the center of the driving motor coupling portion 1131 and/or the center of the main bearing portion 1132 in the axial direction. The sub-bearing portion 1134 is inserted into a second shaft receiving portion 1162e of the second scroll 1162. The second shaft receiving portion 1162e is formed to surround the sub-bearing portion 1134. The circumference of the sub-bearing portion 1134 is rotatably supported by the second shaft receiving portion 1162e.

A bearing protrusion may be formed at the boundary between the main bearing portion 1132 and the eccentric portion 1133 if there is no axial supporting structure of the rotating shaft 1130 and the thrust support portion 1216 to be described later. The bearing protrusion has a ring-shaped bearing surface, and the bearing surface forms a thrust surface together with a rear end of the first shaft receiving portion 1116a to support the rotating shaft 1130 in the axial direction.

However, if the bearing protrusion protrudes from the outer circumferential surface of the rotating shaft 1130, the rotating shaft 1130 should be assembled to the electric compressor 1000 in only one direction. This limits the design freedom and assembly freedom of the electric compressor 1000.

Since the electric compressor 1000 of the present invention has an axial support structure by the rotating shaft 1130 and the thrust support portion 1216, a separate bearing protrusion is not required. Therefore, the rotating shaft 1130 may be assembled to the first shaft receiving portion 1116a in both directions. This is a factor for improving the design freedom and the assembly freedom of the electric compressor 1000.

The center of the driving motor coupling portion 1131, the center of the main bearing portion 1132, and the center of the sub-bearing portion 1134 all match each other in the axial direction. Therefore, the center of these may be referred to as the center of the rotating shaft 1130. Further, it is possible to use the name of a shaft portion as a concept including the driving motor coupling portion 1131, the main bearing portion 1132, and the sub-bearing portion 1134. It may be understood that the driving motor coupling portion 1131, the main bearing portion 1132, and the sub-bearing portion 1134 refer to different portions of the shaft portion.

The lubricant flow path 1135 is formed at the shaft portion and/or the eccentric portion 1133 along the axial direction. The lubricant flow path 1135 is formed at the center of the shaft portion and the lubricant flow path 1135 is formed at a position eccentric from the center of the eccentric portion 1133. The lubricant flow path 1135 corresponds to a supply flow path of oil stored in an oil separating chamber S2.

The center of the eccentric portion 1133 is located at a position eccentric from the center of the rotating shaft 1130 when the center of the shaft portion is the center of the rotating shaft 1130. Accordingly, the first scroll 1161 may be understood as being eccentrically coupled to the rotating shaft 1130, and the eccentric portion 1133 transmits a rotational force of the driving motor 1120 to the first scroll 1161. The first scroll 1161, which receives the rotational force through the eccentric portion 1133, performs an orbiting motion by the oldham ring 1150.

Next, the balance weight 1140 will be described.

The balance weight 1140 is coupled to the rotating shaft 1130. The balance weight 1140 is provided to cancel out an eccentric load (or eccentric amount) of the rotating shaft 1130. The balance weight 1140 includes a ring portion 1141 and an eccentric mass portion 1142.

The ring portion 1141 is formed in the shape of a ring that surrounds the rotating shaft 1130 so as to be coupled to the rotating shaft 1130. An outer diameter of the ring portion 1141 is larger than an outer diameter of the rotating shaft 1130.

The eccentric mass portion 1142 extends from the rim of the ring portion 1141 along the axial direction or a direction parallel to the axial direction. The eccentric mass portion 1142 protrudes in the axial direction or a direction parallel to the axial direction from an arc having a predetermined central angle in 360° of the rim of the ring portion 1141. Accordingly, the eccentric mass portion 1142 partially surrounds the rotating shaft 1130 at a position spaced apart from the rotating shaft 1130.

Next, the oldham ring 1150 will be described.

The oldham ring 1150 is a rotation preventing mechanism that prevents the first scroll 1161 from rotating. However, as the rotation preventing mechanism, an element including a pin and a ring, as well as the oldham ring 1150, may also be applied. The oldham ring 1150 is disposed between the frame portion 1116 of the main housing 1110 and the first scroll 1161. The oldham ring 1150 is seated in the rotation preventing mechanism seating recess 1116c of the frame portion 1116. The oldham ring 1150 is supported by the frame portion 1116 in the axial direction.

The oldham ring 1150 includes a ring portion 1151 and key portions 1152 and 1153.

The ring portion 1151 is formed in a shape of a ring or a shape similar to the ring. The ring portion 1151 is formed to have a size corresponding to the rotation preventing mechanism seating recess 1116c. The ring portion 1151 is seated in the rotation preventing mechanism seating recess 1116c.

The key portions 1152 and 1153 protrude from the ring portion 1151. The key portions 1152 and 1153 are formed as a pair of a first keys 1152 and a pair of second keys 1153.

A pair of first keys 1152 is formed at positions at an angle of 180° with respect to each other in the ring portion 1151. The pair of second keys 1153 are also formed at positions at an angle of 180° with respect to each other in the ring portion 1151. The first key 1152 and the second key 1153 are alternately formed along the ring portion 1151. The first key 1152 and the second key 1153 are formed at positions having an angle of 90° with respect to each other.

The first key 1152 protrudes in the radial direction of the ring portion 1151 and toward the first scroll 1161. The first key 1152 is inserted into a first scroll side key groove 1161d. Also, the first key 1152 may be inserted into a frame portion side key groove 1116c1.

The second key 1153 protrudes in the radial direction of the ring portion 1151. The second key 1153 may protrude toward the frame portion 1116. The second key 1153 is inserted into the frame portion side key groove 1116c2.

Next, the compression unit 1160 will be described.

The compression unit 1160 is formed to compress a compression target fluid such as a refrigerant. The compression unit 1160 includes the first scroll 1161 and a second scroll 1162. The compression unit 1160 is formed by the first scroll 1161 and the second scroll 1162.

The first scroll 1161 is provided on one side of the driving motor 1120. The first scroll 1161 is seated in the scroll seating recess 1116b of the frame portion 1116. The first scroll 1161 is axially supported by the frame portion 1116.

The first scroll 1161 is coupled to the eccentric portion 1133 of the rotating shaft 1130. Accordingly, the first scroll 1161 is eccentrically coupled to the rotating shaft 1130. The first scroll 1161, which receives the rotational force through the eccentric portion 1133, performs an orbiting motion by the oldham ring 1150. The first scroll 1161 may be referred to as orbiting scroll in that it performs the orbiting motion.

The second scroll 1162 is fixed at a position facing the first scroll 1161. The second scroll 1162 is coupled to the second end (rear end) of the main housing 1110. The second scroll 1162 may be referred to as a fixed scroll or non-orbiting scroll in that it is fixed. The second scroll 1162 is disposed between the first scroll 1161 and the rear housing 1170.

The first scroll 1161 and the second scroll 1162 are coupled to each other to form a pair of compression chambers V. As the first scroll 1161 performs an orbiting motion, a capacity of the compression chamber V varies repeatedly, so that the fluid in the compression chamber V may be compressed.

The first scroll 1161 includes an orbiting disk plate portion 1161a, an orbiting wrap 1161b, and a rotating shaft coupling portion 1161c.

The orbiting disk plate portion 1161a is formed in a plate shape corresponding to the inner circumferential surface of the main housing 1110. If the inner circumferential surface of the main housing 1110 has a cross-section corresponding to a circle, the orbiting disk plate portion 1161a has the shape of a disk.

When one surface of the orbiting disk plate portion 1161a facing the second scroll 1162 is a first surface, the orbiting wrap 1161b protrudes from the first surface. When the other surface of the orbiting disk plate portion 1161a facing the frame portion 1116, among the both surfaces of the orbiting disk plate portion 1161a, is a second surface, a first scroll side key groove 1161d is formed on the second surface. The first scroll side key groove 1161d is formed to receive the first key 1152 of the oldham ring 1150 and the first scroll side key groove 1161d extends along a radial direction of the orbiting disk plate portion 1161a.

The orbiting wrap 1161b protrudes in the form of an involute curve from the first surface of the orbiting disk plate portion 1161a toward the second scroll 1162. The involute curve is a curve corresponding to a trace drawn by the end of a thread when the thread wound around a base circle having an arbitrary radius is released. The orbiting wrap 1161b is engaged with a fixed wrap 1162b to be described later to form the compression chamber V on the inner side surface and the outer side surface of the fixed wrap 1162b, respectively.

The rotating shaft coupling portion 1161c is formed at the center of the orbiting disk plate portion 1161a. The rotating shaft coupling portion 1161c is formed into a hollow cylindrical shape to accommodate the eccentric portion 1133 of the rotating shaft 1130. The rotating shaft coupling portion 1161c may protrude from the first surface of the orbiting disk plate portion 1161a toward the second scroll 1162. The rotating shaft coupling portion 1161c is formed at a position corresponding to the base circle of the involute shape. Accordingly, the circumference of the rotating shaft coupling portion 1161c may form the base circle of the involute curve described above in the orbiting wrap 1161b. Therefore, the rotating shaft coupling portion 1161c forms the innermost portion of the orbiting wrap 1161b.

The eccentric portion 1133 penetrates through the rotating shaft coupling portion 1161c in the axial direction. A second bearing 1182 is inserted into the rotating shaft coupling portion 1161c. The second bearing 1182 is disposed between the eccentric portion 1133 and the rotating shaft coupling portion 1161c. The second bearing 1182 forms a bearing surface with the eccentric portion 1133 inserted into the rotating shaft coupling portion 1161c. The second bearing 1182 may be formed in a hollow cylindrical shape to surround the eccentric portion 1133. In the radial direction of the first scroll 1161, the rotating shaft coupling portion 1161c and/or the second bearing 1182 are arranged so as to overlap with the orbiting wrap 1161b.

The second scroll 1162 includes a fixed disk plate portion 1162a, a fixed wrap 1162b, a side wall portion 1162c, a second protrusion 1162d, a second shaft receiving portion 1162e, an oil guide protrusion 1162f, an oil flow path 1162g, a fastening hole 1162h, a weight reducing recess 1162i, an oil guide area 1162j, and a discharge flow path 1162k.

The fixed disk plate portion 1162a is formed in a plate shape corresponding to the second end of the main housing 1110. If the circumference of the second end has a cross-section corresponding to a circle, the fixed disk plate portion 1162a has a circular plate shape.

When one surface of the fixed disk plate portion 1162a facing the first scroll 1161, among both surfaces of the fixed disk plate portion 1162a, is referred to as a first surface, the fixed wrap 1162b is formed on the first surface. However, the fixed wrap 1162b is not visually confirmed in FIG. 3, but may be confirmed in FIG. 4. When the other surface of the fixed disk plate portion 1162a facing the rear housing 1170, among the both surfaces of the fixed disk plate portion 1162a, is referred to as a second surface, the second shaft receiving portion 1162e, the oil guide protrusion 1162f, the fastening hole 1162h, and the like, are formed on the other surface of the fixed disk plate portion 1162a.

The fixed wrap 1162b may be formed in an involute shape like the orbiting wrap 1161b. The fixed wrap 1162b may be formed in various other shapes. As described above, the fixed wrap 1162b is engaged with the orbiting wrap 1161b to form the compression chamber V. The orbiting wrap 1161b is inserted between the fixed wraps 1162b and the fixed wrap 1162b is inserted between the orbiting wraps 1161b.

The side wall portion 1162c protrudes toward the second end of the main housing 1110 along the rim of the fixed disk plate portion 1162a. The side wall portion 1162c is formed so as to surround the fixed wrap 1162b in the radial direction of the second scroll 1162.

The second protrusion 1162d protrudes from the side wall portion 1162c. The second protrusion 1162d is formed to correspond to the first protrusion 1115 of the main housing 1110 described above. A second flow path 1162d1 is formed in the second protrusion 1162d. The second flow path 1162d1 may be formed parallel to the axial direction or may be formed to be inclined with respect to the axial direction. The second flow path 1162d1 forms an intake flow path Fg together with the first flow path 1115a formed inside the first protrusion 1115.

When the second flow path 1162d1 is formed in the axial direction, the outer diameter of the fixed disk plate portion 1162a may be enlarged. Therefore, a winding length of the fixed wrap 1162b with respect to the same outer diameter of the main housing 1110 may be increased. When the second flow path 1162d1 is formed to be inclined, the winding length of the fixed wrap 1162b is reduced compared to the same capacity of the compression chamber V, so that the electric compressor 1000 may be downsized.

The second shaft receiving portion 1162e is formed at the center of the fixed disk plate portion 1162a. The second shaft receiving portion 1162e is formed to accommodate the sub-bearing portion 1134 of the rotating shaft 1130. The second shaft receiving portion 1162e may be formed to be recessed in the axial direction from the fixed disk plate portion 1162a toward the rear housing 1170. When a surface that receives the rotating shaft 1130 is referred to as an inner surface and a surface facing the rear housing 1170 is referred to as an outer surface, the second shaft receiving portion 1162e is recessed from the inner surface and protrudes from the outer surface.

The second shaft receiving portion 1162e may be formed by increasing a thickness of the fixed disk plate portion 1162a so as to be larger than that illustrated in FIG. 3, but in this case, a weight of the second scroll portion 1162 may be increased and an unnecessary portion may be formed to be thick to increase a dead volume. The dead volume refers to a volume which is uselessly wasted structurally and functionally.

The second scroll 1162 is disposed to face one end of the rotating shaft 1130. The second shaft receiving portion 1162e is formed so as to surround the outer circumferential surface and the end portion of the sub-bearing portion 1134. The sub-bearing portion 1134 of the rotating shaft 1130 is inserted into the second shaft receiving portion 1162e. The sub-bearing portion 1134 is supported in the radial direction by the second shaft receiving portion 1162e.

The second shaft receiving portion 1162e is formed in a cylindrical shape with one bottom surface closed. A third bearing 1183 is inserted into the second shaft receiving portion 1162e. The third bearing 1183 may be formed in a hollow cylindrical shape so as to surround the sub-bearing portion 1134 of the rotating shaft 1130. The third bearing 1183 is disposed between the second shaft receiving portion 1162e and the sub-bearing portion 1134. The third bearing 1183 forms a bearing surface with the sub-bearing portion 1134. The third bearing 1183 may be formed of a bush bearing or a needle bearing. The second shaft receiving portion 1162e is arranged to overlap with the sub-bearing portion 1134 and/or the third bearing 1183 in the radial direction of the second scroll 1162.

The oil guide protrusion 1162f is formed below the second shaft receiving portion 1162e. The oil guide protrusion 1162f protrudes downward from the second shaft receiving portion 1162e or protrudes from the fixed disk plate portion 1162a toward the rear housing 1170. An oil guide flow path 1162g may be formed in the oil guide protrusion 1162f.

The oil guide flow path 1162g passes through the second scroll 1162 so that oil stored in the oil separating chamber S2 is supplied to the bearing surface of the rotating shaft 1130. For example, the oil guide flow path 1162g may be formed to penetrate through the oil guide protrusion 1162f and the fixed disk plate portion 1162a. The bearing surface of the rotating shaft 1130 refers to the outer circumferential surface of the main bearing portion 1132, the outer circumferential surface of the eccentric portion 1133, and the outer circumferential surface of the sub-bearing portion 1134. A portion of the oil flows into the back pressure chamber S3 and forms a back pressure to support the first scroll 1161 toward the second scroll 1162.

The fastening hole 1162h is formed at a position corresponding to the fastening hole 1117 of the main housing 1110 and the fastening hole 1172 of the rear housing 1170. The fastening holes 1162h may be formed along the circumference of the fixed disk plate portion 1162a. The fastening hole 1162h may be formed to penetrate through the fixed disk plate portion 1162a and the side wall portion 1162c. The fastening hole 1162h may be formed at a position where the weight reducing recess 1162i is not formed or may be formed at a position passing through an interval between two weight reducing recesses 1162i. The weight reducing recess 1162i is the same as that described above.

The oil guide area 1162j is formed in an area surrounded by the second shaft receiving portion 1162e. The oil guide area 1162j is located between the oil guide flow path 1162h and the lubricant flow path 1135. The oil guide flow path 1162h communicates with the oil separating chamber S2 and the lubricant flow path 1135 may communicate with the respective bearing surfaces provided on the outer circumferential surface of the rotating shaft 1130.

The discharge flow path 1162k corresponds to a flow path through which the fluid compressed in the compression chamber V is discharged to the oil separating chamber S2. The discharge flow path 1162k may be formed to penetrate through the fixed disk plate portion 1162a. A discharge valve 1190 opened at a predetermined pressure or larger may be installed to open and close the discharge flow path.

Next, the rear housing 1170 will be described.

When the driving motor 1120 is formed on one side of the compression unit 1160, the rear housing 1170 is formed on the other side of the compression unit 1160. For example, the rear housing 1170 is formed on the opposite side of the driving motor 1120 with respect to the compression unit 1160.

The rear housing 1170 has an opened first end and a closed second end. Assuming that the driving motor 1120 side is a front side, the first end corresponds to the front end and the second end corresponds to the rear end. When a bolt is inserted through the fastening hole 1172 formed on the rear housing 1170, the bolt sequentially passes through the fastening hole 1172 of the rear housing 1170 and the fastening hole 1162h of the second scroll 1162 and is coupled to the fastening hole 1117 of the main housing 1110. Accordingly, the main housing 1110, the second scroll 1162, and the rear housing 1170 may be bolted together.

The rear end of the rear housing 1170 is spaced apart from the second scroll 1162. Accordingly, an oil separating chamber S2 is formed between the rear housing 1170 and the second scroll 1162. The oil separating chamber S2 corresponds to a space for accommodating the fluid discharged after being compressed in the compression unit 1160 and corresponds to a space for accommodating oil to be supplied to the bearing surface of the rotating shaft 1130. A sealing member (not shown) such as a gasket may be installed between the rear housing 1170 and the second scroll 1162 to seal the oil separating chamber S2.

The rear housing 1170 has a support protrusion 1174 protruding toward the second scroll 1162. The support protrusion 1174 protrudes from the inner surface of the second end. Here, the inner surface refers to the opposite surface of the outer surface from which the fixing portion 1173 protrudes. The support protrusion 1174 may protrude to a position where it is in contact with the oil guide protrusion 1162f of the second scroll 1162. The support protrusion 1174 supports the second scroll 1162 toward the first scroll 1161 along the axial direction.

Next, the inverter module 1200 will be described.

The inverter housing 1210 is coupled to the opposite side of the rear housing 1170, that is, to the front end forming the opening end of the main housing 1110, among both ends of the main housing 1110. The inverter housing 1210 is coupled with the inverter cover 1220 to form an inverter chamber S4 therebetween. The inverter housing 1210 and the inverter cover 1220 may be bolted together.

The inverter component 1230 is mounted in the inverter chamber S4. The electrical connection portion 1250 is electrically connected to inverter component 1230. The electrical connection portion 1250 is exposed toward the motor chamber S1. Next, the axial support structure of the rotating shaft 1130 proposed in the present invention will be described.

Hereinafter, the driving motor 1300 will be described in detail.

The driving motor 1300 includes a stator 1310 and a rotor 1320.

The stator 1310 may include a stator core 1311, a coil 1312 wound around the stator core 1311, an insulator (not shown) formed to insulate the coil 1312, and an insulator cover (not shown).

The stator core 1311 may be made of a metal material. The stator core 1311 may be formed by stacking a plurality of plates formed in an annular disc shape to form a generally cylindrical shape. The stator core 1311 may have a space for accommodating the rotor 1320 therein, and the rotor 1320 may be rotatably installed in the accommodating space as described later.

The stator core 1311 may include a yoke portion 1311a having an annular shape and a teeth portion 1311b protruding inward from the inner circumferential surface of the yoke portion 1311a. The yoke portion 1311a constitutes a body of the stator core 1311 and an outer circumferential surface thereof may be fixed and coupled to the inner circumferential surface of the main housing 1110 by hot pressing.

The yoke portion 1311a may be formed with a refrigerant flow path recess formed in an outer circumferential surface thereof. The refrigerant flow path recess may be a flow path that extends in the axial direction and allows the refrigerant flowing from the intake port 1111 relatively formed on the front side to move to the compression unit 1160 relatively located on the rear side.

The teeth portion 1311b may protrude from the inner circumferential surface of the yoke portion 1311b. The teeth portion 1311b may include a plurality of teeth, and the plurality of teeth may be disposed to be spaced apart from each other along the circumferential direction of the yoke portion 1311b. The teeth portion 1311b may include a protrusion formed to extend along the outer circumferential direction so as to surround at least a portion of the outer circumferential surface of the rotor 1320. The protrusion faces the outer circumferential surface of the rotor 1320 disposed in the accommodating space.

In other words, the teeth portion 1311b faces the outer circumferential surface of the rotor 1320, and may form a generally cylindrical space. The teeth portion 1311b may be spaced apart from the outer circumferential surface of the rotor 1320 by a predetermined distance so as to form a predetermined gap so that the rotor 1320 may be rotatably provided. That is, a diameter of the cylindrical space formed by the teeth portion 1311b may be larger than the diameter of the rotor 1320.

Meanwhile, a coil 1312 is wound around the teeth portion 1311b. As illustrated, the coil 1312 may be wound in a concentric winding manner so that it may be wound on one tooth. However, the present invention is not limited thereto and the coil 1312 may be wound in a distributed winding manner so that it may be simultaneously wound around a plurality of teeth.

Meanwhile, the rotor 1320 may include a rotor core 1321 and a magnetic member 1322 inserted into the rotor core.

The rotor core 1321 may be formed of a metal material such as the stator core 1311. In addition, the rotor core 1321 may be formed by stacking a plurality of plates formed in a disk shape, thereby forming a cylindrical shape as a whole.

The rotor core 1321 may include a magnetic member accommodating portion 1321a into which a magnetic member 1322 is inserted and a rotating shaft accommodating portion 1321b to which the rotating shaft is coupled. Further, the rotor core 1321 may further include a weight reducing recess 1321c and a rotor core fastening portion 1321d.

One end portion of the rotating shaft may be inserted and coupled to the rotating shaft accommodating portion 1321b. The rotating shaft accommodating portion 1321b may be formed to have a circular cross-section and may be formed to penetrate in the axial direction. However, the present invention is not limited thereto and the rotating shaft accommodating portion 1321b may be formed to have an elliptical cross-section.

The weight reducing recess 1321c may be formed to penetrate along the axial direction of the rotor core 1321. The weight reducing recess 1321c may be formed to have a cross-section having a specific shape and reduce the weight of the rotor core 1321 to increase efficiency of the driving motor. The weight reducing recess 1321c may be provided in plural and the plurality of weight reducing recesses 1321c may be formed to be spaced apart at equal intervals to prevent the center of gravity from being eccentric.

A fastening member (not shown) may be inserted into the rotor core fastening portion 1321d so as to fix the plurality of plates stacked to form the rotor core 1321. Here, the fastening member (not shown) may be formed as a bolt, a nut, or the like. The rotor core fastening portion 1321d may be provided in plural along the circumferential direction to uniformly maintain a fastening force of the plurality of plates.

The magnetic member accommodating portion 1321a may be formed to penetrate through the rotor core 1321 in the axial direction so that a space for accommodating the magnetic member 1322 may be formed. The magnetic member accommodating portion 1321a may extend to reach one side and the other side of the rotor 1321. The magnetic member 1322 is inserted into the magnetic member accommodating portion 1321a.

When the magnetic member 1322 is a neodymium (Nd) magnet, the magnetic member accommodating portion 1321a may be formed to have a rectangular cross-section so as to correspond to the shape of the magnetic member 1322. In this case, the magnetic member accommodating portion 1321 a may be formed so as to extend in a direction perpendicular to the radial direction of the rotor core 1321. The magnetic member 1321a may also be formed to extend in a direction perpendicular to the radial direction of the rotor core 1321. That is, the magnetic member 1321a may be formed so that the length of the magnetic member 1321a in the direction perpendicular to the radial direction is longer than the width of the rotor core 1321 in the radial direction.

In addition, the magnetic member accommodating portion 1321a may be formed in plural along the circumferential direction of the rotor core 1321 so as to form a plurality of poles. For example, when the rotor 1320 has eight poles as illustrated, the rotor 1320 is provided with eight magnetic members 1322 and the rotor core 1321 is provided with eight magnetic member accommodating portions 1321a to correspond thereto.

In this case, the plurality of magnetic member accommodating portions 1321a provided along the circumferential direction may be arranged so as to have an octagonal shape as a whole. However, the present invention is not limited thereto, and the rotor 1320 may include four poles and six poles, and four or six magnetic members may be provided.

Here, the magnetic members 1322 may be arranged alternately along the circumferential direction. When an N pole of any one of the magnetic members 1322 faces an outward direction of the rotor 1320, that is, the stator 1310, an N pole of another magnetic member 1322 adjacent to the magnetic member 1322 may face a central direction of the rotor 1320. That is, the poles of the magnetic members 1322 may be arranged alternately along the circumferential direction.

Alternatively, when the magnetic member 1322 is a ferrite magnet, the magnetic member accommodating portion 1321a may be formed to have a concave shape toward the outer circumferential surface of the rotor core 1321. Details of this will be described later.

Meanwhile, flux barriers may be formed at both ends of the magnetic member accommodating portion 1321a. The flux barriers may be formed to form a predetermined space and reduce a torque ripple phenomenon of the driving motor 1300.

Meanwhile, an output of the rotor of the interior permanent magnet synchronous motor (IPMSM) may be increased by a magnet torque due to a magnetic force of the magnetic member formed of a permanent magnet or the like. However, when the Nd magnet having a relatively strong magnetic force is used as a magnetic member for miniaturization and high output of the motor, manufacturing cost of the driving motor is increased due to a material cost.

Meanwhile, the output, that is, the torque, of the interior permanent magnet synchronous motor (IPMSM) having the above-described structure may be determined as the sum of a reluctance torque generated due to a difference between d-axis inductance and q-axis inductance, as well as a magnet torque due to the magnetic member 1322. Such a reluctance torque may be varied based on an interval between adjacent magnetic member accommodating portions 1321a.

The magnetic member accommodating portions 1321a adjacent to each other are spaced apart from each other at a predetermined interval in the circumferential direction and the interval between the magnetic member accommodating portions 1321a may be a flux path through which a magnet flux flows. Here, the reluctance torque is proportional to the interval between the magnetic member accommodating portions 1321a. As the interval between the magnetic member accommodating portions 1321a increases, the reluctance torque also increases.

In order to reduce the amount of the magnetic members and increase the output of the driving motor, the amount of the magnetic members may be reduced using the reluctance torque, thereby compensating for at least a portion of the reduced magnet torque. However, if the reluctance torque is increased by increasing the interval between the magnetic member accommodating portions, a torque ripple phenomenon may be increased to lower reliability of the motor.

The rotor according to the present invention may increase the output of the motor while reducing the usage amount of the magnetic members. At this time, an increase in the torque ripple phenomenon may be suppressed. Hereinafter, the rotor according to the present invention will be described in detail with reference to the drawings.

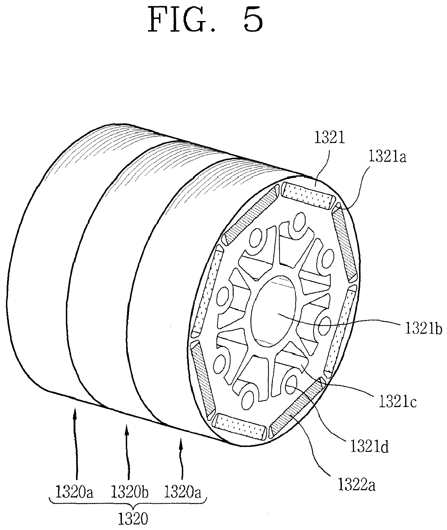

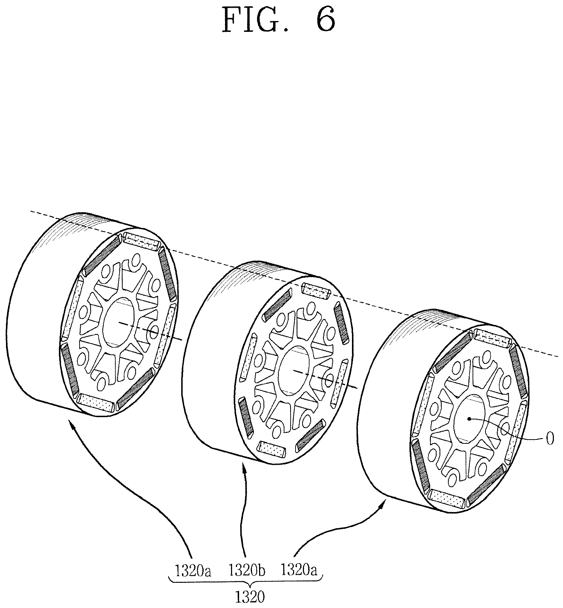

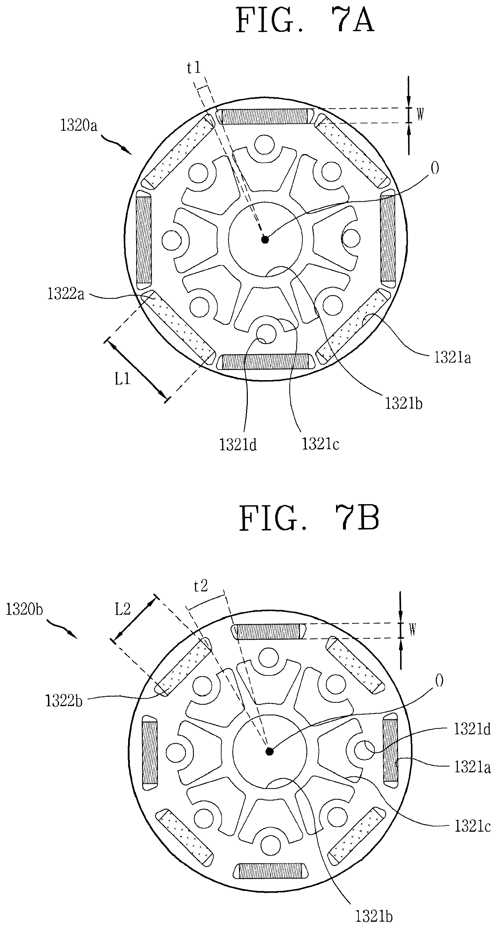

FIG. 5 is a perspective view of a rotor according to an embodiment of the present invention, FIG. 6 is an exploded perspective view of the rotor illustrated in FIG. 4, FIG. 7A is a cross-sectional view of a first stacked body of the rotor illustrated in FIG. 5, and FIG. 7B is a cross-sectional view of a second stacked body of the rotor illustrated in FIG. 5.

As illustrated, the rotor according to the present invention may be formed of a plurality of stacked bodies. As illustrated, the rotor 1320 may be divided into a first area T1 and a second area T2 along the axial direction. Here, one portion of the rotor 1320 corresponding to the first area T1 may be referred to as a first stacked body 1320a and a portion of the rotor corresponding to the second area T2 may be referred to as a second stacked body 1320b.

The first stacked body 1320a and the second stacked body 1320b may be formed to have different magnet torques and reluctance torques and may be stacked alternately in the axial direction to form the rotor 1320.

The first stacked body 1320a may form a first magnet torque and a first reluctance torque and the second stacked body 1320b may form a second magnet torque and a second reluctance torque. Here, a maximum value of the first magnet torque may be formed to be larger than a maximum value of the second magnet torque, and a maximum value of the first reluctance torque may be formed to be smaller than a maximum value of the second reluctance torque.

The first stacked body 1320a may have a first magnetic member 1322a to form a first magnet torque maximum value. In addition, the second stacked body 1320b may have a second magnetic member 1322b to form a second magnet torque maximum value.

Here, the first magnetic member 1322a may be formed to have a magnetic force larger than a magnetic force of the second magnetic member 1322b. When the first magnetic member 1322a and the second magnetic member 1322b are formed of the same material, a volume of the first magnetic member 1322a may be formed to be larger than a volume of the second magnetic member 1322b.

Meanwhile, according to the present invention, radial widths and axial lengths of the magnetic member accommodating portions 1321 of the first stacked body 1320a and the second stacked body 1320b may be formed to be equal. In this case, a first length L1 in the direction perpendicular to the radial direction of the first magnetic member 1322a may be longer than a second length L2 of the second magnetic member 1322b.

Here, in order to prevent distortion of a magnetic flux, the first stacked body 1320a and the second stacked body 1320b may have the same number of magnetic members 1322. For example, as illustrated, when eight first magnetic members 1322a are provided in the first stacked body 1320a, eight second magnetic members 1322b are also provided in the second stacked body 1322b. That is, the first stacked body 1320a and the second stacked body 1320b may have the same polarity.

In addition, the first magnetic member 1322a and the second magnetic member 1322b may be arranged to overlap in the axial direction. More specifically, centers of the first magnetic member 1322a and the second magnetic member 1322b may be axially overlapped with each other in the direction perpendicular to the radial direction of the rotor core 1321.

In addition, a radial width W of the first magnetic member 1322a and the second magnetic member 1322b may be substantially equal. Also, the first magnetic member 1322a and the second magnetic member 1322b may be provided at the same position in the radial direction. In this case, the magnetic member accommodating portion 1321a may be seen as if as one surface facing the center portion of the rotor core and the other surface facing the one surface form flat surfaces. Meanwhile, both side surfaces of the magnetic member accommodating portion 1321a which are parallel to the radial direction and face each other may be seen to extend stepwise along the axial direction.

Referring to FIGS. 7A and 7B, the first magnetic member 1322a and the second magnetic member 1322b are provided at the same position along the radial direction, and the first length L1 of the first magnetic member 1322a is formed to be larger than the second length L2 of the second magnetic member 1322b. In this case, a first interval t1 between the first magnetic members 1322a adjacent to each other may be formed to be smaller than a second interval t2 between the second magnetic members 1322b adjacent to each other. In other words, the second interval t2 may be formed to be larger than the first interval t1.

As described above, the reluctance torque may be changed by the q-axis inductance. Here, the q-axis inductance may be determined by an interval between adjacent magnetic members. Since the second interval t2 between the adjacent second magnetic members 1322b is larger than the first interval t1 between the adjacent second magnetic members 1322a, the second reluctance torque of the second magnetic member 1322b may be formed to be larger than the first reluctance torque of the first magnetic member 1322a.

When it is described with respect to the magnetic member accommodating portion, the interval between adjacent magnetic member accommodating portions 1321a of the second stacked body 1320b is formed to be larger than the interval between adjacent magnetic member accommodating portions 1321a of the first stacked body 1320a. Accordingly, the second reluctance torque of the second magnetic member 1322b may be formed to be larger than the first reluctance torque of the first magnetic member 1322a.

From this point of view, the first stacked body 1320a is considered as a structure in which the magnet torque is relatively strengthened and the second stacked body 1320b is considered as a structure in which the reluctance torque is relatively strengthened.

As described above, the rotor 1320 may be formed as the first stacked body 1320a and the second stacked body 1320b are stacked. In this case, the rotor 1320 according to the present invention has a reduced amount of magnetic members such as a Nd magnet, compared to a case where the rotor is formed of only the first stacked body 1320a, thereby reducing manufacturing cost of the driving motor. In comparison with a case where the rotor is formed of only the second stacked body 1320b, the output of the motor of the rotor 1320 according to the present invention may be increased and a torque ripple phenomenon is relatively reduced. Ultimately, the manufacturing cost of the driving motor may be reduced, while performance of the driving motor is maintained.

Referring again to FIG. 6, the rotor 1320 according to the present embodiment may be formed by sequentially stacking the first stacked body 1320a, the second stacked body 1320b, and the first stacked body 1320a. That is, since the rotor has a larger number of the first stacked body 1320a having relatively strengthened magnet torque than the second stacked body 1320b having relatively strengthened reluctance torque, the rotor 1320 has a structure in which importance of the magnet torque is increased.

Alternatively, according to the present invention, a structure of the rotor 1320 that increases importance of the reluctance torque may also be proposed.

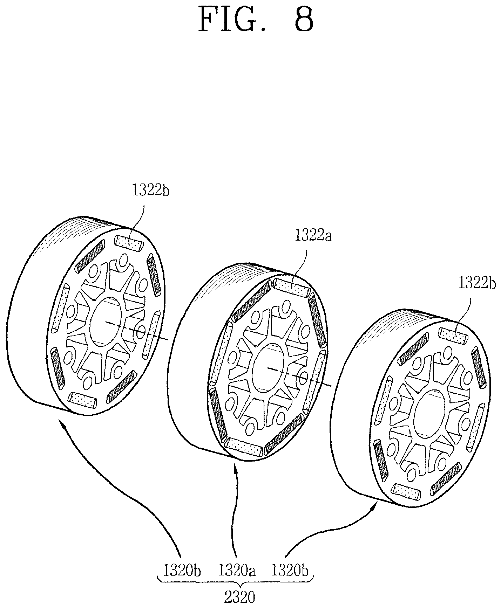

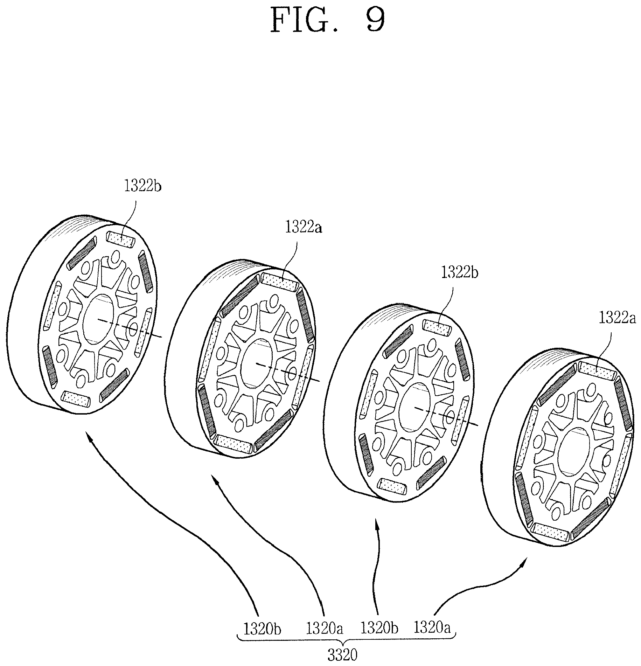

FIG. 8 is an exploded perspective view of a rotor according to a modification of the embodiment of the present invention, and FIG. 9 is an exploded perspective view of a rotor according to another modification of the embodiment of the present invention.

According to an embodiment illustrated in FIG. 8, the rotor may be formed by sequentially stacking the second stacked body 1320b, the first stacked body 1320a, and the second stacked body 1320b. That is, the rotor 2320 according to the present embodiment may have a structure in which importance of the reluctance torque is increased.

According to the embodiment illustrated in FIG. 9, a rotor 3320 may be formed by stacking the first stacked body 1320a, the second stacked body 1320b, the first stacked body 1320a, and the second stacked body 1320b. The rotor 3320 according to the present embodiment may correspond to a structure in which the reluctance torque and the magnet torque are equal.

Meanwhile, axial lengths DL1 and DL2 of the first stacked body 1320a and the second stacked body 1320b may be different from each other. As illustrated, the first axial length DL1 of the first stacked body 1320a and the axial length DL2 of the second stacked body 1320b may be substantially equal. Alternatively, the first stacked body 1320a may be formed such that the first axial length DL1 is longer than the axial length DL2 of the second stacked body 1320b.

For example, in a rotor 2320 according to the modification of the embodiment of FIG. 8, the first stacked body 1320a may extend such that the first axial length DL1 is double the axial length DL2 of the second stacked body 1320b. In this case, one side and the other side of the rotor 2320 may be formed of the second stacked body 1320b, the center portion may be formed of the first stacked body 1320a, but importance of an overall reluctance torque and magnet torque may be equal.

As described above, the rotors 1320, 2320, and 3320 according to the present invention may be derived by various combinations of the first stacked body 1320a and the second stacked body 1320b according to an intention of a designer who considers a magnet flux, a magnet path, torque ripple, and total harmonics distortion (THD).

Meanwhile, in the above-described embodiments, both the first stacked body 1320a and the second stacked body 1320b may be Nd magnets. However, the present invention is not limited thereto, and the types of the magnets included in the first stacked body 1320a and the second stacked body 1320b may be different from each other in the above-described embodiments.

Meanwhile, when the first stacked body and the second stacked body have different types of magnets, a shape of the a magnet provided in the second stacked body may be different from the shape of the rectangle. Hereinafter, the present invention will be described in detail with reference to the drawings.

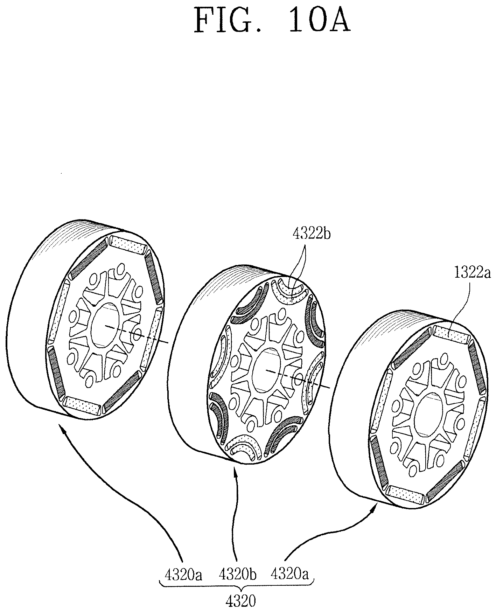

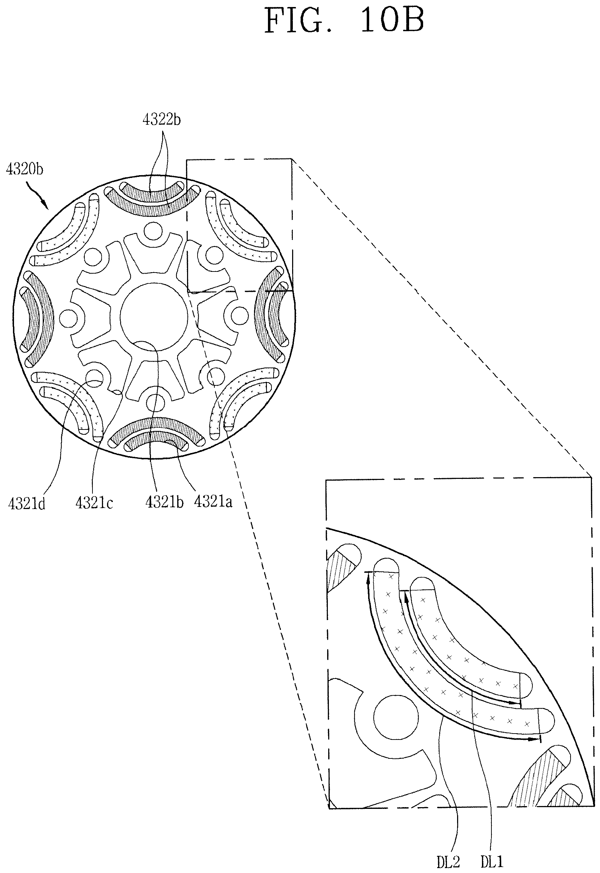

FIG. 10A is an exploded perspective view of a rotor according to another embodiment of the present invention, and FIG. 10B is a cross-sectional view of a second stacked body of the rotor illustrated in FIG. 10A.

According to the present embodiment, the second stacked body 4320b may have a second magnetic member 4322b made of a ferrite magnet. When the second magnetic member 4322b is a ferrite magnet, the second magnetic member 4322b may be formed in a curved shape. For example, the second magnetic member 4322b may be formed in a shape of a round ridge tile. That is, one surface of the second magnetic member 4322b may be concave, and the other surface opposite to the one surface may be convex.

The magnetic member accommodating portion of the second stacked body 4320b into which the second magnetic member 4322b is inserted may be formed to be concave toward the stator outside the rotor core 4321. The second magnetic member 4322b may be provided in plural along the radial direction of the rotor core 4321. As illustrated, two second magnetic members 4322b may be arranged in parallel along the radial direction of the rotor core 4321. Meanwhile, the second magnetic member 4322b relatively closer to the center of the rotor core 4321 may be formed to be longer than the second magnetic member 4322b provided relatively outside. In other words, a first circumferential length PL1 of the second magnetic member 4322b, which is relatively close to the center of the rotor core 4321, may be longer than a second circumferential length PL2 of the second magnetic member 4322b provided relatively outside.

However, the present invention is not limited thereto, and two or more second magnetic members 4322b may be provided along the radial direction of the rotor core 4321. In this case, the circumferential length of the second magnetic member 4322b may be gradually increased from the outer circumferential surface of the rotor core 4321 toward the center thereof.

Meanwhile, the first magnetic member 4320a is the same as the first magnetic member 1320a of the above-described embodiment. As in the above-described embodiment, a rotor 4320 according to the present embodiment may be derived by various combinations of a first stacked body 4320a and a second stacked body 4320b according to an intention of a designer who considers, a magnetic flux, a magnetic path, torque ripple, and total harmonics distortion (THD).

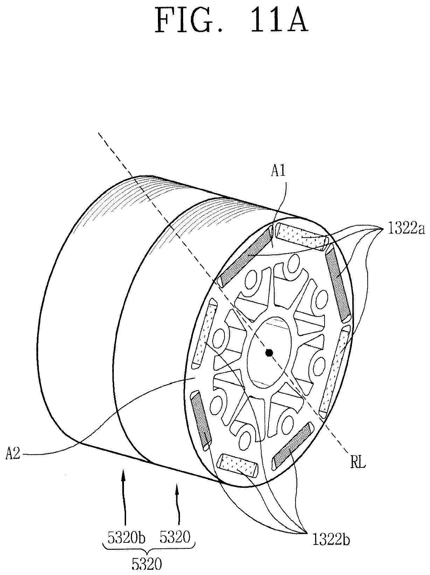

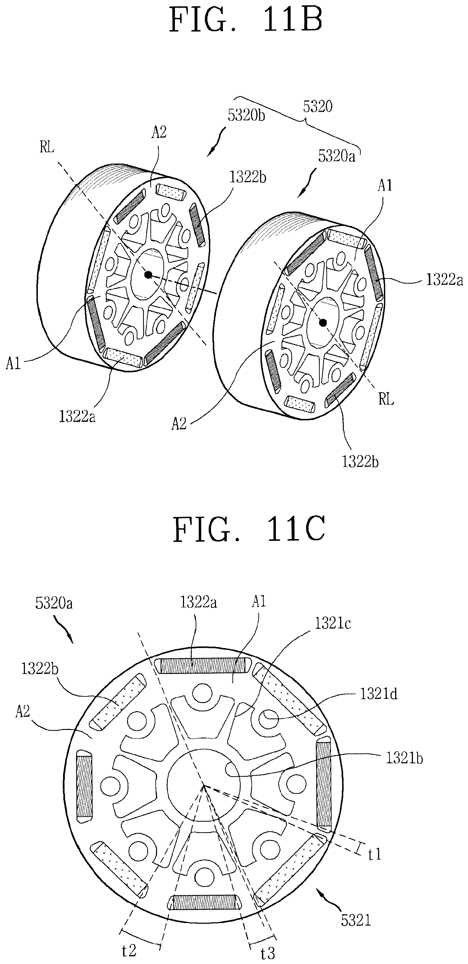

FIG. 11A is a perspective view of a rotor according to another embodiment of the present invention, FIG. 11B is an exploded perspective view of the rotor illustrated in FIG. 11A, and FIG. 11C is a cross-sectional view of the rotor illustrated in FIG. 11B.

A rotor 5420 according to this embodiment may be formed such that one side and the other side of the rotor 5420 have different characteristics with respect to one surface passing through an axial center line of the rotating shaft 1130. That is, the rotor 5420 may have different magnetic members with respect to one surface passing through the axial center line of the rotating shaft 1130.

In other words, when a cross-section of the rotor 5320 formed to have a circular shape is divided into two semicircles, one semicircle is formed to correspond to the first stacked body 1320a and the other semicircle is formed to correspond to the second stacked body 1320b.

Referring to FIG. 11C, the rotor 5320 may be formed to have the first magnetic field (first magnetic field) 531 in a first area A1 and a second magnetic member 1322b in a second area A2 with respect to any one straight line RL passing through the center O of the rotor core 5320 in a cross-section of the rotor core 5321 of the rotor 5320.

The first magnetic member 1322a provided in the first area A1 may be spaced apart from each other at a first interval t1 along the circumferential direction and the second magnetic members 1322b provided in the second area A2 may be spaced apart from each other at a second interval t2 along the circumferential direction. The first magnetic member 1322a and the second magnetic member 1322b may be spaced apart from each other at a third interval t3 which is an average of the first interval t1 and the second interval t2 in the circumferential direction.

In this embodiment, the first and second magnetic members 1322a and 1322b may be provided in the same number. As illustrated, an 8-pole rotor having 8 magnetic members may be provided, and in this case, four magnetic members may be provided as the first magnetic members 1322a and another four magnetic members may be provided as the second magnetic members 1322b. However, the present invention is not limited thereto and may be applied to a rotor having a different number of magnetic members.

Meanwhile, in the case of this embodiment, a magnetic flux may be distorted so that a magnetic path flowing through the rotor 5320 may slant. Accordingly, the rotor 5320 according to the present embodiment may be formed as a plurality of stacked bodies 5320a in the axial direction.

As illustrated, in the first stacked body 5320a, the first area A1 may be formed on one side and the second area A2 may be formed on the other side. In this case, the second stacked body 5320b stacked on the first stacked body 5320a may have the first area A1 formed on the other side and the second area A2 formed on one side.

That is, the first area A1 and the second area A2 may be arranged to intersect with each other. In other words, the first area A1 of the first stacked body 5320a may be arranged to overlap with the second area A2 of the second stacked body 5320b in the axial direction. In addition, the second area A2 of the first stacked body 5320a may be arranged to overlap with the first area A1 of the second stacked body 5320b in the axial direction.

As illustrated, the first area A1 and the second area A2 are each formed to have a semicircular cross-section so that the rotor 5320 may be easily designed. However, the first area A1 or the second area A2 may also be formed in a fan shape according to a design intention of a designer.

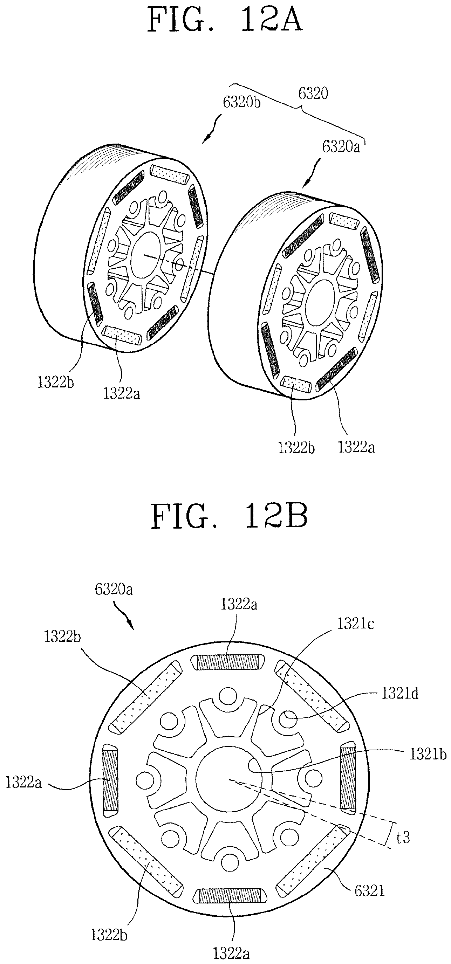

FIG. 12A is an exploded perspective view of a rotor according to another embodiment of the present invention, and FIG. 12B is a cross-sectional view of the rotor illustrated in FIG. 12A.

A rotor 6320 according to the present embodiment may be formed such that the first magnetic member 1322a and the second magnetic member 1322b are alternately arranged along the circumferential direction. Here, the first magnetic member 1322a and the second magnetic member 1322b may be disposed at the same position in the radial direction of a rotor core 6321. Therefore, the first magnetic member 1322a and the second magnetic member 1322b may be spaced apart from each other at a fourth interval t4.

In this embodiment, distortion in a magnet flux may be reduced when compared with the rotor 5320 according to the embodiment of FIGS. 11A to 11B. However, in the case of the driving motor according to this embodiment, when the rotor 6320 is linked to the stator 1310, a relatively strong magnet torque by the first magnetic member 1322a and a relatively weak magnet torque by the second magnetic member 1322b are alternately linked to each other. In this case, the torque ripple phenomenon may be increased.

Accordingly, the rotor 6320 according to the present embodiment may also be formed of a plurality of stacked bodies along the axial direction. Referring to FIG. 12A, the rotor 6320 may be formed by alternately stacking a first stacked body 6320a and a second stacked body 6320b along the axial direction.

Here, the first magnetic member 1322a of the first stacked body 6320a may be disposed to overlap with the second magnetic member 1322b of the second stacked body 6320b along the axial direction and the second magnetic member 1322b of the first stacked body 6320a may be disposed to overlap with the first magnetic member 1322a of the second stacked body 6320b along the axial direction.

The first magnetic member 1322a of the first stacked body 6320a and the second magnetic member 1322b of the second stacked body 6320b form the same pole as each other, and the second magnetic member 1322b of the first stacked body 6320a and the first magnetic member 1322a of the second stacked body 6320b may be arranged to have the same pole.

Specifically, both the first magnetic member 1322a of the first stacked body 6320a and the second magnetic member 1322b of the second stacked body 6320b may be arranged so that the direction toward the stator 1310 is an N pole. At this time, both the second magnetic member 1322b of the first stacked body 6320a and the first magnetic member 1322a of the second stacked body 6320b may be arranged so that the direction toward the stator 1310 is an S pole. With this structure, performance of the driving motor may be maintained, while the usage amount of the magnetic member 1322 is reduced.

The embodiments for carrying out the driving motor and the electric compressor including the same of the present invention have been described but the embodiments are merely illustrative and the present invention is not limited thereto and it is to be understood by those skilled in the art that various modifications may be made without departing from the scope of the present invention as defined by the appended claims.

## Claims

1. A driving motor (1120) comprising:
a stator (1121) having an accommodating space formed therein; and
a rotor (1122) having a magnetic member (1322), rotatably provided in the accommodating space, and rotated by a magnetic interaction with the stator (1121),
wherein the rotor (1122) is formed of a plurality of stacked bodies (1320a, 1320b) having magnetic members (1322) having different magnetic forces, respectively.

2. The driving motor (1120) of claim 1, wherein
the plurality of stacked bodies (1320a, 1320b) have different maximum values of magnet torque.

3. The driving motor (1120) of claim 1 or 2, wherein
a stacked body (1320a) having a relatively small maximum value of magnet torque among the plurality of stacked bodies (1320a, 1320b) has a maximum value of reluctance torque larger than a stacked body (1320b) having a relatively large maximum value of magnet torque.

4. The driving motor (1120) of any one of claims 1 to 3, wherein
the plurality of stacked bodies (1320a, 1320b) have the same number of poles.

5. The driving motor (1120) of any one of claims 1 to 4, wherein
the rotor (1122) comprises:
a first stacked body (1320a) having a first magnetic member (1322a); and
a second stacked body (1320b) having a second magnetic member (1322b) having a magnetic force smaller than a magnetic force of the first magnetic member (1322a),
wherein the first stacked body (1320a) and the second stacked body (1320b) are stacked in an axial direction.

6. The driving motor (1120) of claim 5, wherein
the first and second magnetic members (1322a, 1322b) each are provided as a plurality of magnetic members and arranged to be spaced apart from each other in a circumferential direction of the rotor (1122), and
a circumferential first interval (t1) between adjacent first magnetic members (1322a) is smaller than a circumferential second interval (t2) between adjacent second magnetic members (1322b).

7. The driving motor (1120) of claim 5 or 6, wherein
the first and second magnetic members (1322a, 1322b) are arranged to extend in a direction perpendicular to a radial direction of the rotor (1122), and
an extended length of the first magnetic member (1322a) is larger than an extended length of the second magnetic member (1322b).

8. The driving motor (1120) of any one of claims 5 to 7, wherein
the first and second stacked bodies (1320a, 1320b) include first and second magnetic member accommodating portions (1321a) formed to penetrate in the axial direction so as to accommodate the first and second magnetic members (1322a, 1322b), respectively,
the first and second magnetic member accommodating portions (1321a) extend in a direction perpendicular to a radial direction of the rotor (1122), and
an extended length of the first magnetic member accommodating portion (1321a) is larger than an extended length of the second magnetic member accommodating portion (1321a).

9. The driving motor (1120) of claim 8, wherein
an interval between adjacent first magnetic member accommodating portions (1321a) is smaller than an interval between adjacent second magnetic member accommodating portions (1321a).

10. The driving motor (1120) of any one of claims 5 to 9, wherein
the first magnetic member (1322a) and the second magnetic member (1322b) are disposed to overlap with each other in the axial direction.

11. The driving motor (1120) of any one of claims 5 to 10, wherein
axial lengths of the first stacked body (1320a) and the second stacked body (1320b) are equal.

12. The driving motor (1120) of any one of claims 5 to 11, wherein
the first magnetic member (1322a) is formed to extend in a direction perpendicular to a radial direction of the rotor (1122), and
the second magnetic member (1322b) is formed to be concave toward an outer circumferential surface of the second stacked body (1320b).

13. The driving motor (1120) of any one of claims 5 to 12, wherein
the first magnetic member (1322a) includes an Nd magnet, and
the second magnetic member (1322b) includes a ferrite magnet.

14. The driving motor (1120) of any one of claims 5 to 12, wherein
the second magnetic member (1322b) is provided as a plurality of magnetic members along the radial direction.

15. An electric compressor comprising:
a driving motor (1120);
a rotating shaft coupled to the rotor (1122) and rotating together with the rotor (1122);
a first scroll (1161) coupled to the rotating shaft and performing an orbiting motion; and
a second scroll (1162) coupled to the first scroll (1161) to form a pair of compression chambers (V),
wherein the driving motor (1120) is configured as the driving motor (1120) according to any one of claims 1 to 14.
